# EUROPEAN PATENT APPLICATION

(11) **EP 4 292 904 A1**
(43) Date of publication of application: **20.12.2023**
(21) Application number: 23178515.5
(22) Date of filing: 09.06.2023
(51) Int. Cl.: B62D 15/02, B60W 30/06, B60Q 1/44

(54) **VEHICLE CONTROL DEVICE AND VEHICLE CONTROL METHOD**

(30) Priority: 15.06.2022 JP 2022096808
(71) Applicant: Faurecia Clarion Electronics Co., Ltd., Saitama-shi, Saitama 330-0081 (JP)
(72) Inventor: MATSUSHITA, Yuki, SAITAMA, 330-0081 (JP)
(74) Representative: Lavoix

(57) **Abstract**

Problem

To provide a vehicle control device and a vehicle control method that improve convenience in a case where a user who is outside a vehicle performs a remote operation for the vehicle to exit a parking facility.

Resolution Means

The vehicle control device 170 includes:
a projection control unit 193 that projects a pattern image 200 including an image of a stop line 210 onto a road surface;
a detecting unit 194 that detects a gesture of a user P specifying a position in the pattern image 200 where the image of the stop line 210 is displayed based on a captured image taken of an operator outside the vehicle 1; and
a control information generating unit 196 for generating control information for controlling the traveling of the vehicle 1; wherein
the projection control unit 193 displays the image of the stop line 210 at the position specified by the gesture detected by the detecting unit 194, and
the control information generating unit 196 generates control information for causing the vehicle 1 to travel from the parked position to the position corresponding to the image indicating the stop position and outputs the control information to the drive control device 150 that powers the vehicle 1.

## Description

### TECHINICAL FIELD

The present invention relates to a vehicle control device and a vehicle control method.

### BACKGROUND ART

Patent Document 1 discloses a vehicle travel route display method in which, when a vehicle V0 having an autonomous travel control function is caused to travel by autonomous travel control or by autonomous travel control based on a remote operation from outside of the vehicle V0, a travel route that causes the vehicle V0 to travel by autonomous travel control is set, a display pattern Pt1 indicating the travel route is generated, and the display pattern Pt1 indicating the travel route is visibly displayed on a road surface in a travel direction of the vehicle V0.

### PRIOR ART DOCUMENTS

### [Patent Documents]

[Patent Document 1] Japanese Unexamined Patent Application 2020-131897

### SUMMARY OF THE INVENTION

### Problem to be Solved by the Invention

However, depending on the parking position, the user may not be able to board the vehicle, and the user may remote operate the vehicle from outside the vehicle. In such a case, there is a demand for improving user convenience.

An object of the present disclosure is to provide a vehicle control device and a vehicle control method that improve convenience in a case where a user who is outside a vehicle performs a remote operation to cause the vehicle to exit a parking facility.

### Means for Solving the Problem

A vehicle control device, comprising:
a projection control unit configured to project a pattern image including an image indicating a stop position of a vehicle onto a road surface using a projecting unit;
a detecting unit configured to detect a gesture of an operator specifying a position at which an image indicating the stop position is displayed in the pattern image based on a captured image obtained by photographing an operator outside the vehicle; and
a control information generating unit configured to generate control information to control traveling of the vehicle; wherein
the projection control unit indicates an image indicating the stop position using the projecting unit at the position specified by the gesture detected by the detecting unit, and
the control information generating unit generates control information for causing the vehicle to travel from a parking position where the vehicle is parked to a position corresponding to the image indicating the stop position, and outputs the control information to a drive control device that controls a device that drives the vehicle enabling moving.

### Effect of the Invention

According to the present disclosure, convenience is improved in a case where a user who is outside the vehicle performs a remote operation to cause the vehicle to exit a parking facility.

### BRIEF DESCRIPTION OF THE DRAWINGS

FIG. 1 is a block diagram illustrating a configuration of an on-vehicle device;
FIG. 2 is a diagram illustrating an example of a pattern image; and
FIG. 3 is a flowchart showing an operation of a vehicle control device.

### EMBODIMENTS OF THE INVENTION

### [1. Configuration of on-vehicle device]

Hereinafter, embodiments will be described with reference to the accompanying drawings.

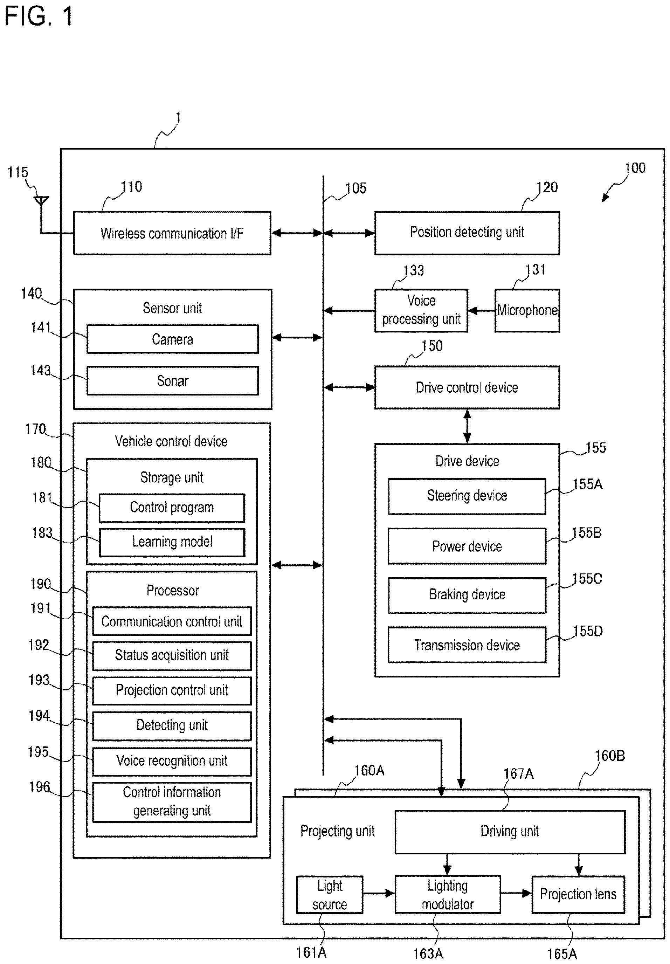

FIG. 1 is a block diagram illustrating a configuration of the on-vehicle device 100 installed on a vehicle 1.

The on-vehicle device 100 includes: a wireless communication interface 110, a position detecting unit 120, a microphone 131, a voice processing unit 133, a sensor unit 140, a drive control device 150, a drive device 155, a projecting unit 160, and a vehicle control device 170. Hereinafter, the term interface is abbreviated as I/F.

The wireless communication I/F 110, position detecting unit 120, voice processing unit 133, sensor unit 140, drive control device 150, projecting unit 160, and vehicle control device 170 are connected via a communication bus 105 to enable mutual data communication. The communication bus 105 is a bus conforming to a standard such as Ethernet (registered trademark), CAN (Controller Area Network), or LIN (Local Interconnect Network).

The wireless communication I/F 110 has an antenna 115 and interface circuitry for short-range wireless communication, and performs wireless communication with a mobile device (not shown) via the antenna 115. Mobile devices include, for example, a Frequency Operated Button (FOB) key or a smart phone carried by a user P of vehicle 1. The FOB key may be read as other terms such as smart key, electronic key, or mobile key. Examples of wireless communication between the wireless communication I/F 110 and the mobile device include LF (Low Frequency), RF (Radio Frequency), and Bluetooth (registered trademark).

The position detecting unit 120 detects the position of the vehicle 1. The position detecting unit 120 includes a global navigation satellite system (GNSS) receiver and a processor. The GNSS receiver and the processor are not illustrated in the figures. The GNSS receiver receives a satellite signal transmitted from a satellite. The processor determines the latitude and longitude indicating the position of the vehicle 1 based on the satellite signals received by the GNSS receiver. In addition, the processor also determines the heading, which is the direction in which the vehicle 1 is traveling, based on differences in multiple obtained latitudes and longitudes. The position detecting unit 120 outputs the latitude and longitude indicating the position of the vehicle 1 and the heading obtained to the vehicle control device 170.

The microphone 131 is installed, for example, on the exterior of the front portion of the vehicle 1, and inputs the voice emitted by the user P outside the vehicle 1 as an analog voice signal.

The voice processing unit 133 includes a processor such as a central processing unit (CPU), a micro processor unit (MPU), or the like. The voice processing unit 133 converts analog voice signals input from the microphone 131 into digital audio signals by applying prescribed audio processing. The voice processing unit 133 outputs the converted digital audio signals to the vehicle control device 170.

The sensor unit 140 includes a plurality of sensors that detect conditions around the vehicle 1. The sensor unit 140 in the present embodiment is equipped with a camera 141 and sonar 143 as sensors. In addition to these sensors, the sensor unit 140 may be configured with sensors that use reflected waves, such as LiDAR (Light Detection and Ranging), millimeter wave radar, and ultrasonic sensors.

Cameras 141 are installed in each of the front, rear, left, and right directions of the vehicle 1 to capture images outside the vehicle 1. Each camera 141 is equipped with an imaging lens and an imaging element. The camera 141 installed on front of the vehicle 1, is installed at a height equal to the top of the vehicle 1, for example, the rearview mirror, and captures images in front of the vehicle 1. In addition, the camera 141 installed on the front of the vehicle 1 is composed of a stereo camera.

The cameras 141 installed in each direction of the front, rear, left, and right of the vehicle 1 respectively capture images to the front, rear, left, and right of the vehicle 1 to generate captured images, and output the generated capture images to the vehicle control device 170.

In addition, the cameras 141 include a camera that captures images of the interior of the vehicle.

The sonar 143 is installed, for example, in each of the front, rear, left, and right directions of the vehicle 1, and performs sensing using ultrasonic waves to detect distance, direction, and the like to obstacles present around the vehicle 1. The sonar 143 outputs, to the vehicle control device 170, sensor data indicating the distance, direction, and the like to the detected obstacle.

The drive control device 150 is a computer device such as an ECU (Electronic Control Unit) or the like having a storage unit and a processor.

The drive control device 150 controls the drive device 155 based on the control information input from the vehicle control device 170. The drive device 155 is equipped with a steering device 155A, a power device 155B, a braking device 155C, and a transmission device 155D.

The steering device 155A is a device including an actuator that steers the steered wheels of the vehicle 1. The drive control device 150 drives the actuator in accordance with the control information, and steers the steered wheels of the vehicle 1.

The power device 155B is a device including an actuator that adjusts the driving force of the driving wheels of the vehicle 1. The actuator corresponds to a throttle actuator when the power source of the vehicle 1 is an engine, and corresponds to a motor when the power source is a motor. The drive control device 150 drives the actuators according to the control information. Thereby the vehicle 1 travels.

The braking device 155C is a device including an actuator that controls a brake system provided in the vehicle 1 in accordance with the control information, and controls a braking force applied to a wheel of the vehicle 1. The drive control device 150 controls the actuator in accordance with the control information, and applies a braking force to the wheel of the vehicle 1.

The transmission device 155D is a device including a transmission and an actuator. The transmission device 155D drives the actuator to control a shift position of the transmission, and switches a transmission gear ratio of the transmission, as well as forward and backward movement of the vehicle 1. The drive control device 150 controls the actuator to change the shift position of the transmission device 155D.

The projecting unit 160 includes a projecting unit 160A and a projecting unit 160B. The projecting unit 160A is provided in the headlight on the left side when facing the vehicle 1, and the projecting unit 160B is provided in the headlight on the right side when facing the vehicle 1. Since the projecting unit 160A and the projecting unit 160B have the same configuration, the configuration of the projecting unit 160A will be described below. Further, the projecting unit 160A and the projecting unit 160B are collectively referred to as the projecting unit 160. The projecting unit 160A includes a light source 161A, a lighting modulator 163A, a projection lens 165A, and a driving unit 167A.

The light source 161A is provided with, for example, a light-emitting diode (LED) as a light source.

The lighting modulator 163A includes a light modulation element capable of changing the transmittance of light incident from the light source 161A. The driving unit 167A controls the transmittance of the light modulator in accordance with the control of the vehicle control device 170 to change the transmittance of the light from the light source 161A. The driving unit 167A drives the lighting modulator 163A according to control by the vehicle control device 170, which controls the light output by the lighting modulator 163A and displays the image on the road surface. The light modulation element is not limited to a transmissive light modulation element, and may be, for example, a reflective light modulation element, or a digital micromirror device (DMD).

The projection lens 165A is a lens that projects the light output from the lighting modulator 163A onto a road surface. The driving unit 167A drives the projection lens 165A according to control by the vehicle control device 170. This changes the position of the road surface on which the light projected by the projection lens 165A is projected.

The vehicle control device 170 is a computer device, such as an ECU, and is equipped with a storage unit 180 and a processor 190.

The storage unit 180 includes read only memory (ROM) and random access memory (RAM). The ROM stores the control program 181, the learning model 183, and various settings information. The RAM is used as a calculation region by the processor 190.

The learning model 183 is a machine learning model that detects human characteristics by machine learning using teacher data, in other words, supervised learning. Machine learning models can be constructed using algorithms and data structures. Machine learning methods are not limited in any way, and various techniques may be used, for example, neural networks, deep learning, and the like. Teacher data is data containing a number of combinations of input vectors that are input to the machine learning model and the correct label information that should be obtained from those input vectors. In the present embodiment, the input vector corresponds to the captured image, and the label information is the human characteristics. Characteristics include palms, arm joints, shoulders, and the like.

The processor 190 is an arithmetic processing device including a processor such as a CPU, MPU, or the like. The processor 190 may be configured by a single processor or by a plurality of processors. In addition, the processor 190 may be configured by a system-on-a-chip (SoC) that integrates a part or all of the storage unit 180 and other circuits. In addition, the processor 190 may be configured by a combination of a CPU that executes a program and a digital signal processor (DSP) that executes prescribed arithmetic processing. Furthermore, all of the functions of the processor 190 may be implemented by hardware, or may be configured using a programmable device.

The vehicle control device 170 is provided with a communication control unit 191, a status acquisition unit 192, a projection control unit 193, a detecting unit 194, a voice recognition unit 195, and a control information generating unit 196 as a functional configuration. These functional configurations are functions achieved by the processor 190 executing a computer program and performing arithmetic operations.

The communication control unit 191 controls the wireless communication I/F 110 to perform short-range wireless communication with the mobile device. The communication control unit 191 notifies the status acquisition unit 192 and the projection control unit 193 that communication with the mobile device is possible when the user P, who is carrying the mobile device, approaches the vehicle 1, and is ready for short-range wireless communication. The user P, who is carrying the mobile device, is the equivalent of the operator.

The status acquisition unit 192 controls the sensor unit 140. The camera 141 generates a capture image based on control of the status acquisition unit 192 and outputs the generated captured image to the vehicle control device 170. The storage unit 180 temporarily stores the captured images input from the camera 141.

The status acquisition unit 192 also controls the sonar 143. The sonar 143 executes sensing according to the control of the status acquisition unit 192 and outputs sensor data indicating sensing results to the vehicle control device 170. The storage unit 180 temporarily stores sensor data input from the sonar 143.

When notification is input from the communication control unit 191 that short-range wireless communication with a mobile device is feasible, the status acquisition unit 192 changes the image capture interval of the camera 141 installed on the front of the vehicle 1. The status acquisition unit 192 changes the image capture interval of the camera 141 installed on the front of the vehicle 1 to be shorter than before the notification was input. This increases the accuracy of detection of the user P in front of the vehicle 1 and of gestures performed by the user P.

When the projection control unit 193 receives a notification from the communication control unit 191 that short-range wireless communication with the mobile device is feasible, the projection control unit controls the projecting unit 160 to project the pattern image 200 on the road surface in front of the vehicle 1.

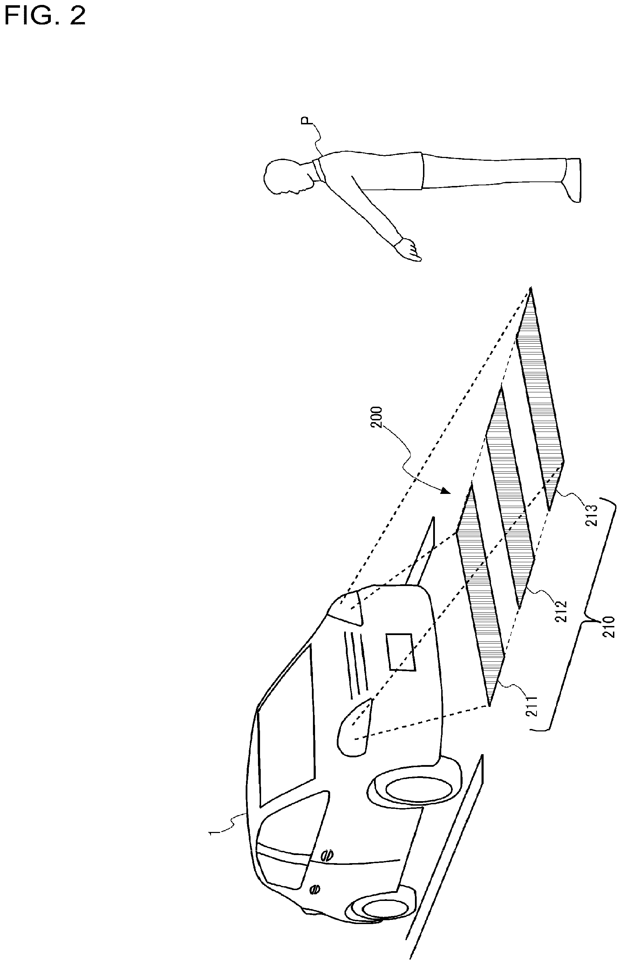

FIG. 2 is a diagram illustrating an example of a pattern image 200.

The pattern image 200 includes a plurality of stop lines 210, which are images indicating the stop position of the vehicle 1. The pattern image 200 illustrated in FIG. 2 includes three stop lines 210: a first stop line 211, a second stop line 212, and a third stop line 213 starting from close to the vehicle 1.

The first stop line 211, second stop line 212, and third stop line 213 are line segments parallel to the width of the vehicle 1. In the pattern image 200, the first stop line 211, second stop line 212, and third stop line 213 are formed at regular intervals in the car length direction.

FIG. 2 illustrates a pattern image 200 including three stop lines 210: the first stop line 211, the second stop line 212, and the third stop line 213. However, the number of stop lines 210 is not limited to three, but may be two, four, or more.

The detecting unit 194 reads the captured images from the storage unit 180 and analyzes the read images to detect gestures performed by the user P using hands and arms. The gesture detected by the detecting unit 194 is the gesture of selecting one of the stop lines 210 included in the pattern image 200. Specifically, the gesture is a gesture in which the user P points to the road surface using hands and arms.

First, the detecting unit 194 analyzes the image captured by the camera 141 installed on the front of the vehicle 1 to detect the distance and heading from the reference position to the user P. The reference position may be, for example, the lens position of the camera 141 in the vehicle 1 or the position of a part of the vehicle 1 set in advance. The distance and heading between the camera 141 and a part of the vehicle 1 set in advance are stored in the storage unit 180 in advance as setting information.

Next, the detecting unit 194 detects characteristic points such as fingers, arms, shoulders, and the like of the user P included in the captured image using the learning model 183. The detecting unit 194 detects the gesture of user P pointing to the road surface based on the plurality of detected characteristic points. When the detecting unit 194 detects the gesture of user P pointing to the road surface, the detecting unit calculates the angle of the user P's arms and fingers with respect to the vertical direction.

The detecting unit 194 determines the stop line 210 selected by the user P based on the detected distance and heading from the reference position to the user P, the angle of the user P's arms and fingers relative to the vertical direction, and the distance of each stop line 210 from the vehicle 1. The detecting unit 194 outputs, to the projection control unit 193, the stop line 210 information that it determines that user P has selected.

When stop line 210 information is input from the detecting unit 194, the projection control unit 193 erases the stop lines from the pattern image 200 except the stop line 210 indicated by the input stop line 210 information. In other words, the projection control unit 193 projects the pattern image 200 containing only the stop line 210 selected by the user P onto the road surface. In addition, the projection control unit 193 outputs information indicating the distance between the stop line 210 included in the pattern image 200 and the vehicle 1 to the control information generating unit 196.

The storage unit 180 stores information indicating the distance between the vehicle 1 and the first stop line 211, the second stop line 212, and the third stop line 213 in advance as setting information.

In addition, when the projection control unit 193 receives notification from the voice recognition unit 195 that the change instruction has been accepted, the projection control unit controls the projecting unit 160 to project the pattern image 200 again. A change instruction is an instruction to change the stop line 210 selected by the user P.

Afterwards, the detecting unit 194 determines the stop line 210 selected by the user P and again outputs the information for the determined stop line 210 to the projection control unit 193. The projection control unit 193 erases stop lines from the pattern image 200 except for the stop lines 210 indicated by the input stop line 210 information. The projection control unit 193 outputs the information indicating the distance between the stop line 210 included in the pattern image 200 and the vehicle 1 to the control information generating unit 196 again.

The voice recognition unit 195 inputs voice signals from the voice processing unit 133. The voice signal input from the voice processing unit 133 corresponds to the voice input from the microphone.

The voice recognition unit 195 analyzes the input voice signal using generally known voice recognition techniques to recognize the voice spoken by the user P.

For example, the voice recognition unit 195 recognizes an exit instruction statement for the vehicle 1 to exit a parking facility, or a change instruction to change the position of the stop line 210 temporarily selected. The instruction statement to exit a parking facility includes, for example, "exit," "start exit," or the like. The change instruction statement includes "change," "change position," and the like.

When the voice recognition unit 195 recognizes the instruction statement to exit a parking facility, the voice recognition unit notifies the control information generating unit 196 that the instruction to exit a parking facility has been received.

When the voice recognition unit 195 recognizes the change instruction statement, the voice recognition unit notifies the projection control unit 193 that the change instruction has been received. The projection control unit 193 controls the projecting unit 160 to project the pattern image 200 on the road surface in front of the vehicle 1, again.

The control information generating unit 196 inputs information from the projection control unit 193 indicating the distance between the stop line 210 selected by the user P and the vehicle 1. The control information generating unit 196 generates control information when the control information generating unit receives notification from the voice recognition unit 195 that the instruction to exit a parking facility has been received. Control information is information that controls traveling of the vehicle 1. The control information generated by the control information generating unit 196 causes the vehicle 1 to travel from the parking position to the position of the stop line 210 selected by the user P. The control information generating unit 196 outputs the generated control information to the drive control device 150.

### [2. Operation of vehicle control device]

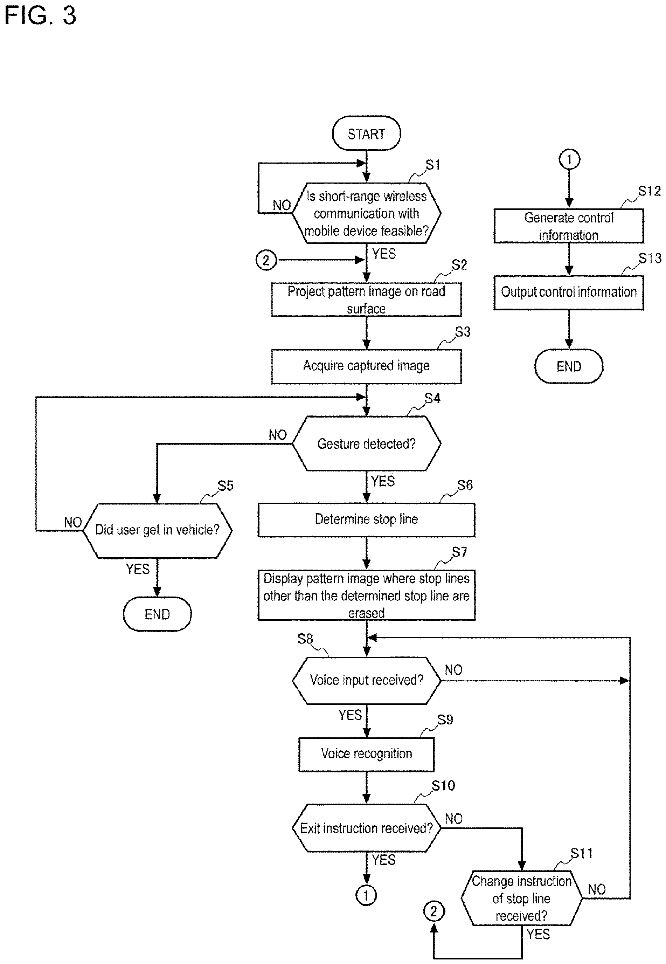

FIG. 3 is a flowchart showing an operation of a vehicle control device 170. The operation illustrated in the flowchart in FIG. 3 corresponds to the vehicle control method. Operation of the vehicle control device 170 is described below.

First, the vehicle control device 170 determines whether short-range wireless communication with the mobile device is enabled (step S1). In other words, the vehicle control device 170 determines whether or not the user P, carrying the mobile device, has approached within range enabling short-range wireless communication. If the vehicle control device 170 is not in a state where short-range wireless communication with the mobile device is enabled (step S1: NO), processing returns to the determination of step S1.

If the vehicle control device 170 is in a state where short-range wireless communication with the mobile device is enabled (step S1: YES), the vehicle control device controls the projecting unit 160 so as to project the pattern image 200 onto the road surface (step S2). Step S2 corresponds to the projecting step. Next, the vehicle control device 170 acquires the captured image captured by the camera 141 from the storage unit 180 (step S3) and analyzes the acquired captured image to determine whether a gesture is detected (step S4). In the present embodiment, the vehicle control device 170 analyzes the captured image to determine whether a gesture of pointing to the road surface is detected (step S4). Step S4 corresponds to the detection step.

If the vehicle control device 170 fails to detect a gesture of pointing to the road surface (step S4: NO), the vehicle control device determines whether the user P has boarded the vehicle 1 (step S5). For example, the vehicle control device 170 determines that user P has boarded the vehicle 1 upon receipt of a signal from the door ECU that controls the opening and closing of the door, or when the user P is detected in a captured image capturing the vehicle interior. The door ECU is not illustrated. If the vehicle control device 170 determines that the user P has boarded the vehicle 1 (step S5: YES), the vehicle control device terminates this processing flow. If the user P has not boarded the vehicle 1 (step S5: NO), the vehicle control device 170 returns to the determination of step S4.

If the vehicle control device 170 detects a gesture of pointing at the road surface (step S5: YES) [sic], the vehicle control device determines the stop line 210 selected by the user P by this gesture (step S6). The vehicle control device 170 determines the stop line 210 selected by the user P based on the distance and heading from the reference position to the user P, the angle of the user P's arms and fingers to the vertical direction, and the distance of each stop line 210 from the vehicle 1, as described above.

When the vehicle control device 170 determines the stop line 210 selected by the user P, the vehicle control device projects a pattern image 200 on the road surface with the stop lines other than the determined stop line 210 erased (step S7). By projecting the pattern image 200, with all stop lines 210 but the determined stop line 210 erased, onto the road surface, the image of the stop line 210 is displayed at the position specified by the detected gesture.

Next, the vehicle control device 170 determines whether or not voice is input (step S8). If there is no voice input (step S8: NO), the vehicle control device 170 waits until voice is input.

When voice is input (step S8: YES), the vehicle control device 170 performs voice recognition on the input voice (step S9). The vehicle control device 170 determines whether or not the result of voice recognition is an instruction to exit a parking facility (step S10). If the vehicle control device 170 determines that the result of voice recognition is an instruction to exit a parking facility (step S10: YES), the vehicle control device generates control information (step S12). This control information causes the vehicle 1 to move to the position of the stop line 210 contained in the pattern image 200 displayed in step S7. Step S12 corresponds to the generation step. The vehicle control device 170 outputs the generated control information to the drive control device 150 (step S13). This moves the vehicle 1 from the parking position to the stop line 210 position selected by the user P.

If the result of voice recognition is not an instruction to exit a parking facility (step S10: NO), the vehicle control device 170 determines whether or not the result of voice recognition is an instruction to change the stop line 210 (step S11). If the result of voice recognition is an instruction to change the stop line 210 (step S11: YES), the vehicle control device 170 returns processing to step S2 and projects the pattern image 200 on the road surface again.

If the result of voice recognition is not a change instruction (step S11: NO), the vehicle control device 170 returns to step S8 and again performs voice input. The vehicle control device 170 may also execute processing in response to the recognized voice.

### [3. Modified Example]

The number of stop lines 210 included in the pattern image 200 may be one.

The vehicle control device 170 projects the pattern image 200 containing one stop line 210 onto the road surface. If the stopping position of the vehicle 1 is different from the position of the stop line 210 displayed on the road surface, the user P performs a gesture to change the position of the stop line 210. The user P specifies the position where the stop line 210 is displayed by pointing. The vehicle control device 170 analyzes the captured images to detect the position designated by the user P. Hereafter, the position specified by the user P is referred to as the specified position. Detection of the specified position is based on distance and heading from the reference position to the user P and the angle of the user P's arms and fingers with respect to the vertical direction, as described above.

When the vehicle control device 170 detects the specified position, the vehicle control device image processes the image data that is the source of the pattern image 200 based on the distance from the detected specified position to the vehicle 1, and changes the position of the stop line 210 in the pattern image 200. The vehicle control device 170 controls the projecting unit 160 so as to project the pattern image 200 including the repositioned stop line 210 onto the road surface.

When the position for the vehicle 1 to stop matches the position of the stop line 210 displayed on the road surface, the user P instructs the vehicle 1 to exit a parking facility by saying "exit," "start exit," or other voice command.

When the vehicle control device 170 receives an instruction to exit a parking facility via voice recognition, the vehicle control device generates control information based on the distance from the parking position to the stop line 210. The vehicle control device 170 outputs the generated control information to the drive control device 150. This causes the vehicle 1 to move to the position of the stop line 210.

### [4. Effects]

As described above, the vehicle control device 170 in the present embodiment includes a projection control unit 193, a detecting unit 194, and a control information generating unit 196.

The projection control unit 193 projects the pattern image 200, which includes an image of the stop line 210 for the vehicle 1 to stop, onto the road surface by means of the projecting unit 160.

The detecting unit 194 detects the gesture of the user P specifying the position in the pattern image 200 where the image of the stop line 210 is displayed, based on the captured image taken of the user P who is outside the vehicle 1.

The control information generating unit 196 generates control information that controls driving of the vehicle 1.

The projection control unit 193 displays the pattern image 200 including the image of the stop line 210 on the road surface by means of the projecting unit 160 at the position specified by the gesture detected by the detecting unit 194.

The control information generating unit 196 generates control information for the vehicle 1 to travel from the parking position to the position corresponding to the image of the stop line 210, and outputs the control information to the drive control device 150 that controls the device for powering moving of the vehicle 1.

According to this configuration, the user P can specify the position of the stop line 210 for the vehicle 1 to stop using a gesture. This improves convenience when the vehicle 1 is to exit a parking facility by remote operation of the user P who is outside of the vehicle 1.

The pattern image 200 includes a plurality of images of a first stop line 211, a second stop line 212, and a third stop line 213.

The detecting unit 194 determines whether the first stop line 211, second stop line 212, or third stop line 213 is selected based on the detected gesture.

According to this configuration, the processing load of the vehicle control device 170 can be reduced compared to the case where any position specified by the user P by gesture is detected, because the configuration is to determine whether the position specified by the gesture is the first stop line 211, second stop line 212, or third stop line 213.

The vehicle control device 170 is equipped with a voice recognition unit 195 that recognizes the voice input by the microphone 131.

The control information generating unit 196 generates control information when the voice recognition unit 195 recognizes an instruction statement for the vehicle 1 to leave a parking facility.

According to this configuration, the user P can give voice instructions for the vehicle 1 to leave the parking facility without having to operate a control device or the like. This improves convenience when the vehicle 1 is to exit a parking facility by remote operation of the user P who is outside of the vehicle 1.

The embodiments described above are only examples of one aspect of the present invention, and can be arbitrarily modified and applied to the extent that there is no deviation from the main purpose of the invention.

For example, the block diagram of the configuration of the on-vehicle device 100 illustrated in FIG. 1 is a schematic diagram illustrating the structural elements classified according to their main processing content to facilitate understanding of the invention of this application, and the structural elements can be further classified into more structural elements according to their processing content. In addition, classification such that one structural element executes more processes is also feasible.

The processing units in the flowchart illustrated in FIG. 3 are divided according to the main processing content to facilitate understanding of the processing of the vehicle control device 170, and the present invention is not limited by the way the processing units are divided or named. The processing of the vehicle control device 170 may be further divided into more processing units, depending on the nature of the processing. In addition, the processing of the vehicle control device 170 may be divided so that one processing unit includes more processing.

### Explanation of Codes

1. Vehicle
193. Projection control unit
194. Detecting unit
195. Voice recognition unit
196. Control information generating unit

## Claims

1. A vehicle control device, comprising:
a projection control unit configured to project a pattern image including an image indicating a stop position of a vehicle onto a road surface using a projecting unit;
a detecting unit configured to detect a gesture of an operator specifying a position at which an image indicating the stop position is displayed in the pattern image based on a captured image obtained by photographing an operator outside the vehicle; and
a control information generating unit configured to generate control information to control traveling of the vehicle; wherein
the control information generating unit generates control information for causing the vehicle to travel from a parking position where the vehicle is parked to a position corresponding to the image indicating the stop position, and outputs the control information to a drive control device that controls a device that drives the vehicle to move.

2. The vehicle control device according to claim 1, wherein
the pattern image includes a plurality of images indicating the stop position, and
the detecting unit determines whether one of the plurality of images indicating the stop position is selected based on the detected gesture.

3. The vehicle control device according to claim 1 or 2, wherein
a voice recognition unit configured to recognize voice input by a microphone; wherein
the control information generating unit generates control information when the voice recognition unit recognizes a voice instructing the vehicle to exit a parking facility.

4. A vehicle control method, comprising the steps of:
a projecting step of projecting a pattern image including an image indicating a stop position of a vehicle onto a road surface by a projecting unit;
a detecting step for detecting a gesture of an operator specifying a position at which an image indicating the stop position is displayed in the pattern image based on a captured image obtained by photographing an operator outside the vehicle; and
a generating step for generating control information for controlling traveling of the vehicle; wherein
the generating step includes generating control information for causing the vehicle to travel from a parking position where the vehicle is parked to a position corresponding to the image indicating the stop position, and outputting the control information to a drive control device that controls a device that drives the vehicle enabling moving.
